Europäisches Patentamt

European Patent Office

Office européen des brevets

(19)

(11) EP 0 903 684 B1

(12) **FASCICULE DE BREVET EUROPEEN**

| | |
|---|---|
| (45) Date de publication et mention<br>de la délivrance du brevet:<br>**17.12.2003 Bulletin 2003/51** | (51) Int Cl.⁷: **G06K 11/18** |

(21) Numéro de dépôt: **98402281.4**

(22) Date de dépôt: **16.09.1998**

(54) **Périphérique d'entrée pour ordinateur, à commutation automatique entre des modes de fonctionnement 3D et 2D, et son procédé d'interaction avec écran d'affichage**

Eingabevorrichtung für Rechner zum automatischen Umschalten zwischen 3D- und 2D-Betriebsarten, sowie Verfahren zur Interaktion mit einem Bildschirm

Computer input device with automatic switching between 3D and 2D operating modes, and method for interaction with a display screen

(84) Etats contractants désignés:
**CH DE ES GB IT LI NL SE**

(30) Priorité: **18.09.1997 FR 9711646**

(43) Date de publication de la demande:
**24.03.1999 Bulletin 1999/12**

(73) Titulaire: **AEROSPATIALE Société Nationale Industrielle**
**75781 Paris Cédex 16 (FR)**

(72) Inventeurs:
• **Chevassus, Nicolas**
**92370 Chaville (FR)**

• **Rouzeval, Matthieu**
**31780 Castelginest (FR)**

(74) Mandataire: **Poulin, Gérard**
**BREVALEX**
**3, rue du Docteur Lancereaux**
**75008 Paris (FR)**

(56) Documents cités:
**EP-A- 0 420 500     US-A- 5 144 594**
**US-A- 5 237 647**

• **"THREE-DIMENSIONAL POINTING DEVICE" IBM TECHNICAL DISCLOSURE BULLETIN, vol. 37, no. 6A, 1 juin 1994, page 597 XP000455898**

# Description

## Domaine technique

L'invention concerne principalement un périphérique d'entrée, pour ordinateur.

Ce périphérique d'entrée peut être utilisé dans la majorité des domaines d'application des ordinateurs. Parmi ces domaines, on citera, de façon non limitative, la visite ou la construction de mondes virtuels, la conception assistée par ordinateur (CAO), les jeux vidéo, etc..

L'invention concerne également un procédé d'interaction d'un tel périphérique d'entrée avec un écran d'affichage d'ordinateur.

## Etat de la technique

Les périphériques d'entrée utilisés sur les ordinateurs peuvent être classés en trois catégories, selon le type d'action qu'ils autorisent sur un élément tel qu'un curseur affiché sur l'écran de l'ordinateur. Ainsi, selon le type de périphérique d'entrée utilisé, il est possible de déplacer cet élément dans une seule direction (mode "1D"), dans deux directions (mode "2D") ou dans trois directions (mode "3D").

Parmi les périphériques d'entrée, de type 1D, on trouve les touches "flèche" du clavier de l'ordinateur.

Ces dispositifs 1D, qui constituent les périphériques d'entrée les plus simples, sont d'utilisation très limitée. On notera cependant qu'ils sont parfois utilisés en association avec les dispositifs 2D, pour effectuer une action tridimensionnelle sur un élément matérialisé sur l'écran. Il s'agit cependant d'une utilisation peu commode, qui nécessite à elle seule les deux mains de l'utilisateur, et qui interdit toute rotation de l'élément affiché.

Les périphériques d'entrée de type 2D sont les plus couramment utilisés. On trouve en effet dans cette catégorie les souris 2D classiques, ainsi que les dispositifs à balle roulante, communément appelés "trackball". Si ces dispositifs d'entrée permettent de commander un déplacement bidimensionnel d'un élément affiché sur l'écran de l'ordinateur, ils ne permettent pas de commander une rotation, indispensable lorsqu'on désire à la fois positionner et orienter un objet sur l'écran.

Les périphériques d'entrée de type 3D incluent tous les dispositifs utilisés en association avec des logiciels permettant de créer sur l'écran des espaces virtuels tridimensionnels. Ces dispositifs sont naturellement adaptés au déplacement d'un élément dans les trois dimensions pour la visite de mondes virtuels ou de maquettes numériques, pour la construction d'objets numériques en CaO, etc.. Les principaux périphériques appartenant à cette catégorie sont les souris 3D et les dispositifs appelés "traqueurs".

Les souris 3D sont des souris 2D, sur lesquelles est implanté un organe mobile tel qu'un manche à balai (ou "joystick"), une bille ou autre. De tels dispositifs sont décrits, par exemple, dans les documents US 5 298 919 et US 4 933 670.

Les souris 3D présentent un certain nombre d'inconvénients, liés principalement au fait que la commande de déplacement de l'élément affiché sur l'écran dans la troisième direction est assurée par un organe spécifique dont la manoeuvre s'ajoute au déplacement de la souris sur son support. Cela se traduit par la nécessité d'une formation spécifique pour les utilisateurs de tels dispositifs. De plus, l'élément mobile assurant la commande dans la troisième direction dispose fréquemment de mouvements limités, ce qui constitue un inconvénient lorsqu'un déplacement important selon cette troisième direction doit être effectué. Enfin, les souris 3D sont généralement dépourvues de commandes de rotation ou d'orientation de l'élément affiché.

Le document US-A-5 144 594 sur lequel se fonde le préambule de la revendication 1 décrit une souris comprenant un contacteur pour pouvoir passer d'un mode de fonctionnement 2D à un mode 3D et vice versa.

Les traqueurs sont des dispositifs qui sont placés dans la main de l'utilisateur et dans lesquels est implanté un capteur, par exemple de type électromagnétique. Ce capteur détecte un champ magnétique basse fréquence émis par une source stationnaire extérieure. Lorsque l'utilisateur déplace le traqueur et en modifie l'orientation, le champ magnétique reçu par le capteur varie. Les signaux émis par le capteur sont donc représentatifs de la position et de l'orientation du traqueur dans l'espace. De tels dispositifs sont décrits, notamment, dans le document US 5 237 647.

Par rapport aux souris 3D, les traqueurs ont pour avantage de pouvoir être utilisés par une personne dépourvue d'une formation spécifique, du fait que tous les mouvements de la main de l'utilisateur sont transmis à l'élément affiché sur l'écran, d'une manière identique quelle que la soit la direction du mouvement. De plus, ils permettent de commander l'orientation de cet élément.

Les traqueurs ont toutefois pour inconvénient d'être trop sensibles lorsqu'on désire procéder au positionnement précis d'un élément dans une scène tridimensionnelle affichée sur l'écran, ou lorsque l'exécution d'une tâche spécifique impose de travailler temporairement en mode 2D.

## Exposé de l'invention

L'invention a principalement pour objet un périphérique d'entrée d'un type nouveau, conçu pour pouvoir passer automatiquement d'un mode de fonctionnement 3D à un mode de fonctionnement 2D et inversement, notamment afin de permettre à un utilisateur dépourvu d'une formation spécifique de pouvoir travailler dans un espace tridimensionnel en pouvant bénéficier à volonté de la précision procurée par une action bidimensionnelle, lorsque la tâche à exécuter l'exige.

Conformément à l'invention, ce résultat est obtenu au moyen d'un périphérique d'entrée pour ordinateur, comprenant un boîtier mobile apte à être saisi par un utilisateur, et des moyens de détection de position et d'orientation tridimensionnelles et bidimensionnelles du boîtier, caractérisé par le fait qu'un contacteur à deux états est placé sur une face du boîtier apte à être posée sur un support plan, de façon à occuper automatiquement un premier état correspondant à un mode de fonctionnement bidimensionnel du périphérique, lorsque le boîtier est posé sur le support, et un deuxième état, correspondant à un mode de fonctionnement tridimensionnel du périphérique, lorsque le boîtier est soulevé du support.

Grâce à un tel périphérique d'entrée, toutes les tâches effectuées habituellement dans un espace tridimensionnel à l'aide des périphériques d'entrée 3D existants peuvent être effectuées de la même manière qu'avec un traqueur classique. Toutefois, lorsqu'une précision importante est demandée, ou lorsque la tâche à accomplir l'exige, il devient possible de travailler temporairement en mode 2D en posant le boîtier sur un support. Cette action a en effet immédiatement pour conséquence de placer le périphérique d'entrée dans son état de fonctionnement bidimensionnel, de sorte qu'il se comporte alors comme une souris 2D traditionnelle.

Dans une forme de réalisation préférée de l'invention, les moyens de détection de position et d'orientation tridimensionnelles comprennent un capteur électromagnétique monté dans le boîtier et un circuit électronique de prétraitement placé à l'extérieur du boîtier et relié au capteur par un conducteur électrique. Le capteur électromagnétique est sensible, de façon connue, à un champ magnétique tridimensionnel produit par une source stationnaire extérieure.

Selon une caractéristique analogue à celle que l'on trouve sur la majorité des périphériques d'entrée existants, le boîtier est muni de préférence d'au moins un bouton de déclenchement de traitements informatiques. Ce bouton peut notamment être actionné lorsqu'un curseur mobile, représentant la position du boîtier dans l'espace virtuel de l'écran, est soit amené sur un parmi un ensemble d'icônes affichées sur l'écran, soit sur un objet de la scène virtuelle représentée à l'écran. Il permet alors de déclencher l'exécution d'un traitement informatique préalablement défini et associé à cette icône ou à cet objet.

Un circuit électronique de mise en forme des signaux délivrés par le contacteur et par le bouton est alors monté dans le boîtier.

Les moyens de détection de position et d'orientation tridimensionnelles délivrent des signaux représentatifs des coordonnées x, y, z et des orientations $\alpha$, $\beta$, $\gamma$ du boîtier dans un repère orthonormé fixe R(O, i, j, k), lié au support et dont les axes i et j sont dans le plan du support.

L'invention a aussi pour objet un procédé d'interaction d'un périphérique ainsi défini avec un écran d'affichage d'un ordinateur. Ce procédé comprend les étapes suivantes :

- détermination du mode de fonctionnement du périphérique ;
- calcul des coordonnées x', y', z' et orientations a', $\beta$', $\gamma$' d'un curseur 3D affiché sur l'écran (34), dans un repère orthonormé R' (O',i',j',k') lié à une scène virtuelle représentée sur l'écran, à partir des signaux délivrés par les moyens (16) de détection de position et d'orientation tridimensionnelles, dans le mode de fonctionnement tridimensionnel ;
- calcul des coordonnées x", y" et orientation $\gamma$" d'un curseur 2D, dans un repère orthonormé R" (O", i", j", k") lié à l'écran et dont les axes i" et j" sont situés dans le plan de l'écran, à partir des signaux délivrés par les moyens de détection de position et d'orientation tridimensionnelles, dans le mode de fonctionnement bidimensionnel.

Dans le mode de fonctionnement tridimensionnel, un déplacement du boîtier dans le repère R d'une position P1 de coordonnées $x_1$, $y_1$, $z_1$ et d'orientations $\alpha_1$, $\beta_1$, $\gamma_1$ à une position P2 de coordonnées $x_2$, $y_2$, $z_2$ et d'orientations $\alpha_2$, $\beta_2$, $\gamma_2$ se traduit par un déplacement du curseur 3D dans le repère R' d'une position P'1 de coordonnées $x'_1$, $y'_1$, $z'_1$ et d'orientations $\alpha'_1$, $\beta'_1$, $\gamma'_1$ à une position P'2 de coordonnées $x'_2$, $y'_2$, $z'_2$ et d'orientations $\alpha'_2$, $\beta'_2$, $\gamma'_2$, calculées à l'aide des relations :

$$x'_2 = x'_1 + Cx\,(x_2 - x_1)$$

$$y'_2 = y'_1 + Cy\,(y_2 - y_1)$$

$$z'_2 = z'_1 + Cz\,(z_2 - z_1)$$

$$\alpha'_2 = \alpha'_1 + C\alpha\,(\alpha_2 - \alpha_1)$$

$$\beta'_2 = \beta'_1 + C\beta\,(\beta_2 - \beta_1)$$

$$\gamma'_2 = \gamma'_1 + C\gamma\,(\gamma_2 - \gamma_1)$$

dans lesquelles Cx, Cy, Cz, C$\alpha$, C$\beta$ et C$\gamma$ représentent des gains paramétrables, respectivement en x, y, z, $\alpha$, $\beta$ et $\gamma$.

Dans le mode de fonctionnement bidimensionnel, un déplacement du boîtier sur le support dans le repère R d'une position P1 de coordonnées $x_1$, $y_1$ et d'orientation $\gamma_1$ à une position P2 de coordonnées $x_2$, $y_2$ et d'orientation $\gamma_2$ se traduit par un déplacement du curseur 2D dans le repère R" d'une position P"1 de coordonnées $x"_1$, $y"_1$ et d'orientation $\gamma"_1$ à une position P"2,

de coordonnées $x''_2$, $y''_2$ et d'orientation $\gamma''_2$ calculées à l'aide des relations :

$$x''_2 = x''_1 + Fx \, (x_2 - x_1)$$

$$y''_2 = y''_1 + Fy \, (y_2 - y_1)$$

$$\gamma''_2 = \gamma''_1 + F\gamma \, (\gamma_2 - \gamma_1)$$

dans lesquelles Fx, Fy, $F\gamma$ représentent des gains paramétrables, respectivement en x, y et $\gamma$, la position P1 étant la position initiale du boîtier lors du passage du périphérique dans le mode de fonctionnement bidimensionnel, la position P''1 étant la position finale du curseur 2D lors du précédent passage du mode de fonctionnement bidimensionnel au mode de fonctionnement tridimensionnel.

## Brève description des dessins

On décrira à présent, à titre d'exemple non limitatif, une forme de réalisation préférée de l'invention, en se référant aux dessins annexés, dans lesquels :

- la figure 1 est une vue en perspective représentant schématiquement le boîtier d'un périphérique d'entrée conforme à l'invention et les éléments qu'il contient ;
- la figure 2 représente schématiquement un exemple de réalisation du périphérique d'entrée conforme à l'invention, incluant le boîtier de la figure 1, ainsi que les éléments extérieurs à ce boîtier assurant notamment sa liaison avec l'unité centrale de l'ordinateur associé ; et
- la figure 3 est une perspective très schématique destinée à expliquer les changements de coordonnées effectués dans l'unité centrale, à partir des signaux délivrés par le périphérique d'entrée, pour permettre la représentation de la position et de l'orientation du boîtier du périphérique d'entrée par un curseur 2D ou par un curseur 3D, sur l'écran d'affichage de l'ordinateur.

## Description détaillée d'une forme de réalisation

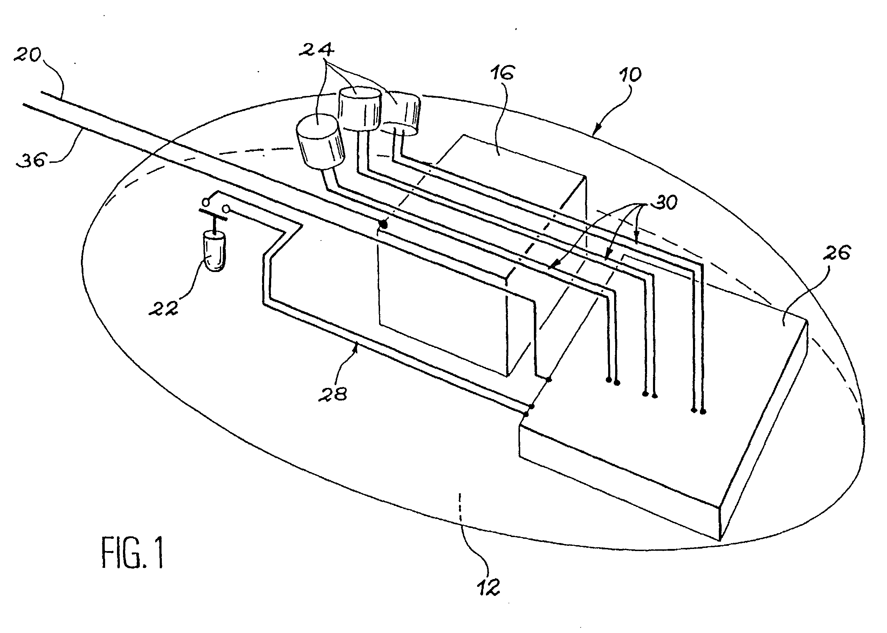

Sur la figure 1, la référence 10 désigne de façon générale un boîtier mobile d'un périphérique d'entrée conforme à l'invention, destiné à être utilisé sur un ordinateur. Le boîtier 10 est représenté comme s'il était transparent, afin que les éléments qu'il contient soient visibles sur la figure. Ce boîtier 10 présente une forme extérieure permettant à un utilisateur de le saisir, de le déplacer et de l'orienter à volonté dans un espace ou zone de travail tridimensionnel. A cet effet, la surface extérieure du boîtier 10 peut présenter des empreintes (non représentées) conçues pour recevoir les doigts de l'utilisateur.

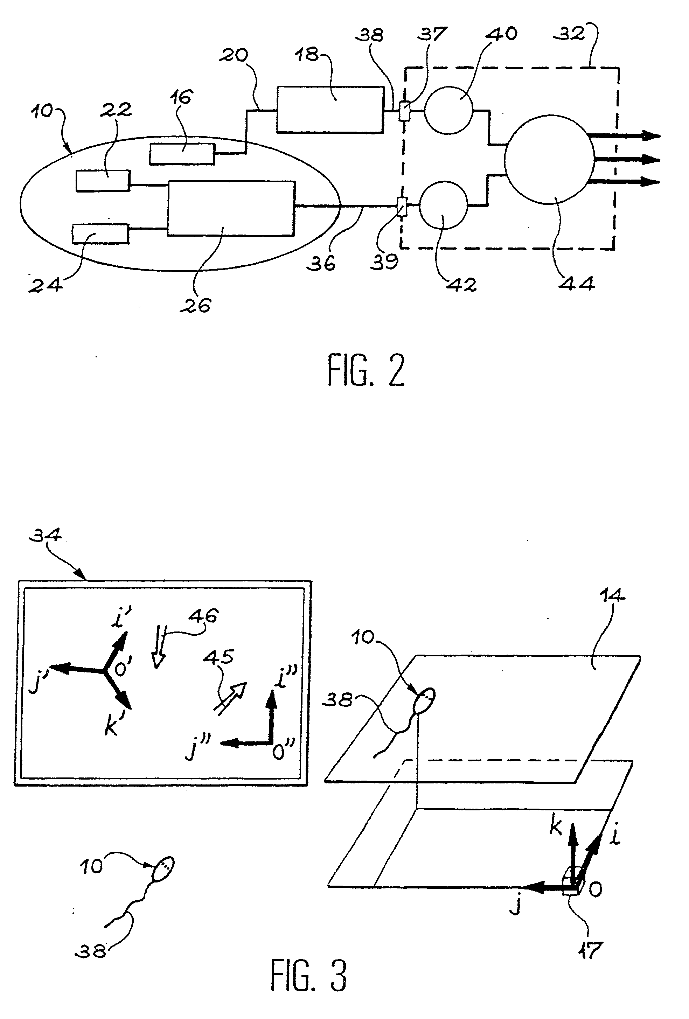

Le boîtier mobile 10 du périphérique d'entrée selon l'invention présente également sur sa surface extérieure une face inférieure 12, de configuration générale sensiblement plane. Cette face 12 permet à l'utilisateur de poser le boîtier 10 sur un support plan, généralement horizontal, tel que celui qu'on a illustré schématiquement en 14 sur la figure 3. Plus précisément, le boîtier 10 peut être déplacé et orienté à volonté sur le support 14, à la manière d'une souris 2D classique d'ordinateur, lorsque sa face 12 est posée sur ce support.

Le périphérique d'entrée selon l'invention comprend de plus des moyens de détection de la position et de l'orientation tridimensionnelles du boîtier 10 à l'intérieur de l'espace de travail dans lequel ce boîtier peut être déplacé et orienté par l'utilisateur. Dans la forme de réalisation préférée illustrée sur les figures, ces moyens de détection de la position et de l'orientation tridimensionnelles du boîtier 10 comprennent un capteur électromagnétique 16, monté à l'intérieur de ce boîtier. Une source stationnaire 17 (figure 3), placée sur la table supportant l'écran d'affichage de l'ordinateur ou en tout autre emplacement fixe de l'installation, crée un champ magnétique 3D basse fréquence dans la zone de travail. Le capteur électromagnétique 16 est sensible aux modifications de ce champ magnétique 3D engendrées par ses propres déplacements.

La source stationnaire 17 est située à l'origine d'un repère orthonormé fixe R(O, i, j, k), dans lequel le capteur électromagnétique 16 mesure les variations des coordonnées x, y, z et des orientations $\alpha$, $\beta$, $\gamma$ du boîtier 10 à l'intérieur de l'espace de travail où ce dernier peut être déplacé par l'utilisateur.

Le capteur électromagnétique 16, aussi appelé "traqueur 3D", peut notamment être du type "Fastrak" fabriqué par la société "Polhemus" ou du type "Flock of Birds" fabriqué par la société "Ascension". Il est généralement associé à un circuit électronique de prétraitement 18 (figure 2). Plus précisément, le circuit électronique de prétraitement 18 est placé dans un boîtier stationnaire situé à l'extérieur du boîtier mobile 10, et il est connecté électriquement au capteur électromagnétique 16 par un conducteur électrique 20 formant une première liaison série entre le boîtier 10 et le reste de l'installation.

L'ensemble comprenant le capteur électromagnétique 16, la source stationnaire 17 et le circuit électronique de prétraitement 18 est bien connu de l'homme du métier, de sorte qu'aucun description détaillée n'en sera faite. Un tel ensemble est décrit, par exemple, dans le document US-A-5 237 647.

Il est à noter qu'en variante, les moyens de détection de la position et de l'orientation tridimensionnelles du boîtier 10 peuvent être réalisés de façon différente, par exemple sur la base de systèmes ultrasonores ou lumineux, ou au moyen d'accéléromètres ou de gyroscopes.

Conformément à l'invention, un contacteur 22 à deux états, commandant un interrupteur, est placé sur la face inférieure 12 du boîtier 10. Plus précisément, le montage du contacteur 22 sur la face 12 est réalisé de telle sorte que le contacteur change automatiquement d'état lorsque le boîtier 10 est posé sur le support plan 14 et lorsqu'il est soulevé de ce support. Ainsi, le contacteur 22 occupe par exemple un état fermé lorsque le boîtier est posé sur son support 14 et un état ouvert lorsqu'il est soulevé de ce support.

L'état fermé du contacteur 22 constitue pour celui-ci un premier état, correspondant à un mode de fonctionnement bidimensionnel du périphérique. A l'inverse l'état ouvert du contacteur 22 constitue un deuxième état correspondant à un mode de fonctionnement tridimensionnel du périphérique.

La présence du contacteur 22 sur la face 12 du boîtier 10 permet donc de faire passer automatiquement le périphérique d'entrée selon l'invention d'un mode de fonctionnement 2D à un mode de fonctionnement 3D, et inversement, selon qu'il est posé ou non sur le support 14.

En dehors de sa face 12 prévue pour être posée sur le support 14, le boîtier 10 est équipé, sur sa surface extérieure, d'un à trois boutons 24 de déclenchement de traitements informatiques commandant des interrupteurs. Les boutons 24 sont destinés à remplir des fonctions comparables à celles des boutons qui équipent habituellement les souris 2D de conception classique. Il s'agit donc d'éléments bien connus de l'homme du métier, de sorte qu'aucune description détaillée n'en sera faite.

Un circuit électronique 26 de mise en forme est également placé à l'intérieur du boîtier 10 du périphérique. Ce circuit électronique 26 est connecté électriquement à l'interrupteur du contacteur 22 et aux interrupteurs associés aux boutons 24, respectivement par des conducteurs électriques 28 et 30. Il a pour fonctions d'éliminer les rebonds liés au changement d'état des interrupteurs des boutons et du contacteur et d'effectuer le codage de l'état de ces interrupteurs. Ce circuit électronique 26 est semblable dans sa fonction au circuit électronique de mise en forme qui équipe les souris 2D existantes, de sorte qu'aucune description détaillée n'en sera faite.

Comme l'illustre en particulier la figure 2, les signaux codés issus du circuit électronique 26 de mise en forme sont transmis à l'unité centrale 32 de l'ordinateur, pilotant l'écran 34 (figure 3) du dispositif d'affichage, par un conducteur électrique 36. Ce conducteur électrique 36 forme une deuxième liaison série entre le boîtier mobile 10 du périphérique d'entrée et l'unité centrale 32 de l'ordinateur.

Dans la pratique, les conducteurs électriques 20 et 36 issus du boîtier 10 sont regroupés sous la forme d'un câble 38 (figure 3) reliant ce boîtier au reste de l'installation.

Le circuit électronique 18 de prétraitement est connecté sur un premier port série 37 de l'unité centrale 32 de l'ordinateur par une première liaison série matérialisée par un conducteur électrique 38. Par ailleurs, le conducteur électrique 36 matérialisant la deuxième liaison série est connecté sur un deuxième port série 39 de l'unité centrale 32 de l'ordinateur.

Comme on l'a illustré schématiquement sur la figure 2, à l'intérieur de l'unité centrale 32 de l'ordinateur, les signaux admis par le premier port série 37 sont traités par un premier module logiciel 40 permettant de récupérer les coordonnées x, y et z et les orientations $\alpha$, $\beta$ et $\gamma$ du capteur électromagnétique 16. De façon comparable, les données admises par le deuxième port série 39 de l'unité centrale 32 sont traitées dans un deuxième module logiciel 42, permettant de récupérer l'état et les transitions d'état des interrupteurs du contacteur 22 et des boutons 24 du périphérique d'entrée conforme à l'invention.

Le premier module logiciel 40 est un module logiciel classiquement associé à l'ensemble constitué par le capteur électromagnétique 16, la source stationnaire 17 de champ magnétique et le circuit électronique 18 de prétraitement dans les installations utilisant un traqueur. Il est donc bien connu de l'homme du métier, de sorte qu'aucune description détaillée n'en sera faite.

De même, le deuxième module logiciel 42 est semblable au module logiciel habituellement associé aux boutons des souris 2D de conception classique. Il est donc également bien connu de l'homme du métier, de sorte qu'il n'en sera pas non plus fait de description détaillée.

Comme l'illustre également de façon schématique la figure 2, les données issues du premier module logiciel 40 et du deuxième module logiciel 42 sont exploitées, à l'intérieur de l'unité centrale 32 de l'ordinateur, par un troisième module logiciel 44. Ce troisième module logiciel 44 prend en compte les changements d'état du contacteur 22 et calcule les coordonnées et les orientations d'un curseur 2D 45 ou d'un curseur 3D 46 (figure 3), selon que le périphérique d'entrée est en mode de fonctionnement bidimensionnel ou en mode de fonctionnement tridimensionnel.

De façon plus précise, lorsque le boîtier 10 est posé sur son support 14, c'est-à-dire lorsque le contacteur 22 occupe son premier état, le troisième module logiciel 44 agit automatiquement selon un mode de fonctionnement bidimensionnel du périphérique, alors qu'il agit selon un mode de fonctionnement tridimensionnel du périphérique lorsque le boîtier 10 est soulevé de son support 14, c'est-à-dire lorsque le contacteur 22 occupe son deuxième état.

Dans le mode de fonctionnement bidimensionnel, les déplacements et les changements d'orientation du boîtier 10 sur le support 14 se traduisent par des déplacements et des changements d'orientation du curseur 2D 45 dans le plan de l'écran 34.

Au contraire, dans le mode de fonctionnement tridimensionnel, les déplacements et les changements d'orientation du boîtier 10 dans la zone de travail se traduisent par des déplacements et des changements d'orientation du curseur 3D 46 dans un espace virtuel correspondant à une scène 3D affichée sur l'écran 34.

Comme on l'a illustré schématiquement sur la figure 3, dans le mode de fonctionnement bidimensionnel du périphérique, le troisième module logiciel 44 transforme les coordonnées x, y et z et les orientations α, β et γ du boîtier 10 dans le repère orthonormé fixe R (O, i, j, k) lié au support 14 en deux coordonnées x", y" et une orientation γ" du curseur 2D 45 dans un repère orthonormé R"(O", i", j", k") lié à l'écran 34. Plus précisément, alors que le plan O, i, j est parallèle à celui du support 14, que les vecteurs i et j sont orientés respectivement vers le fond et vers la gauche, et que le vecteur k est orienté vers le haut, le plan O", i", j" est confondu avec le plan de l'écran et les vecteurs i" et j" sont orientés respectivement vers le haut et vers la gauche sur cet écran.

Par conséquent, un déplacement du boîtier 10 sur son support 14, en éloignement de l'utilisateur, c'est-à-dire dans le sens du vecteur i du repère R se traduit sur l'écran 34 par un déplacement vers le haut du curseur 2D 45.

Dans le mode de fonctionnement tridimensionnel du périphérique, le troisième module logiciel 44 transforme les coordonnées x, y, z et les orientations α, β, γ du boîtier 10 dans le repère orthonormé fixe R(O, i, j, k) en des coordonnées x' , y', z' et des orientations α', β', γ du curseur 3D 46 dans un repère orthonormé R' (O', i', j', k') lié à un espace virtuel correspondant à une scène affichée sur l'écran 34.

Par conséquent, dans ce mode de fonctionnement 3D, un déplacement et un changement d'orientation du boîtier 10 dans la zone de travail se traduisent par un déplacement et un changement d'orientation correspondants du curseur 3D 46 dans la scène virtuelle affichée sur l'écran 34.

Les calculs effectués par le troisième module logiciel 44 dans chacun des deux modes de fonctionnement du périphérique vont à présent être explicités.

Dans le mode de fonctionnement bidimensionnel, les transformations effectuées par le troisième module logiciel 44 sont les suivantes :

$$x''_2 = x''_1 + Fx\,(x_2 - x_1)$$

$$y''_2 = y''_1 + Fy\,(y_2 - y_1)$$

$$\gamma''_2 = \gamma''_1 + F\gamma\,(\gamma_2 - \gamma_1)$$

Dans ces relations, $x_1$ et $y_1$ représentent les coordonnées et $\gamma_1$ l'orientation du boîtier 10 dans le repère R, dans une position initiale P1 du boîtier 10 correspondant à l'instant où celui-ci est posé sur le support 14 et déclenche le passage du périphérique d'entrée dans le mode de fonctionnement 2D.

Les termes $x''_1$ et $Y''_1$ représentent les coordonnées et $\gamma_1$ l'orientation du curseur 2D 45 dans le repère R", dans une position initiale P"1 de ce curseur correspondant à la position P1 du boîtier 10. Cette position initiale P"1 du curseur 2D 45 est aussi la position finale de ce curseur, lors du précédent passage du périphérique du mode de fonctionnement 2D au mode de fonctionnement 3D.

Par ailleurs, les termes $x_2$ et $y_2$ représentent les coordonnées et $\gamma_2$ l'orientation du boîtier 10 dans le repère R, à l'instant considéré, dans une position P2 du boîtier sur le support.

Les termes $x''_2$ et $y''_2$ représentent les coordonnées et $\gamma''_2$ l'orientation du curseur 2D 45 dans le repère R", au même instant, dans une position P"2 de ce curseur correspondant à la position P2 du boîtier 10.

Enfin, les termes Fx, Fy et Fγ désignent les gains paramétrables, respectivement en x, y et γ, dans ce mode de fonctionnement 2D.

Par ailleurs, lorsque le périphérique se trouve dans son mode de fonctionnement tridimensionnel, le troisième module logiciel 44 effectue les transformations suivantes :

$$x'_2 = x'_1 + Cx\,(x_2 - x_1)$$

$$y'_2 = y'_1 + Cy\,(y_2 - y_1)$$

$$z'_2 = z'_1 + Cz\,(z_2 - z_1)$$

$$\alpha'_2 = \alpha'_1 + C\alpha\,(\alpha_2 - \alpha_1)$$

$$\beta'_2 = \beta'_1 + C\beta\,(\beta_2 - \beta_1)$$

$$\gamma'_2 = \gamma'_1 + C\gamma\,(\gamma_2 - \gamma_1)$$

Dans ces relations, $x_1$, $y_1$, $z_1$ et $\alpha_1$, $\beta_1$, $\gamma_1$ représentent respectivement les coordonnées et les orientations du boîtier 10 dans le repère R, dans une position initiale P1 de ce boîtier.

Les termes $x_2$, $y_2$, $z_2$ et $\alpha_2$, $\beta_2$, $\gamma_2$ représentent respectivement les coordonnées et les orientations du boîtier 10 dans le repère R, dans une position P2 de ce boîtier correspondant à l'instant considéré.

Les termes $x'_1$, $y'_1$, $z'_1$ et $\alpha'_1$, $\beta'_1$, $\gamma_1$ représentent respectivement les coordonnées et les orientations du curseur 3D 46 dans le repère R', dans une position P'1 correspondant à la position P1 du boîtier.

Les termes $x'_2$, $y'_2$, $z'_2$ et $\alpha'_2$, $\beta'_2$, $\gamma_2$ représentent respectivement les coordonnées et les orientations du curseur 3D dans le repère R', dans une position P'2 correspondant à la position P2 du boîtier.

Enfin, Cx, Cy, Cz, Cα, Cβ et Cγ représentent les gains paramétrables, respectivement en x, y, z, α, β, γ, dans le mode de fonctionnement 3D.

La description qui précède fait apparaître clairement que le périphérique d'entrée selon l'invention constitue un dispositif original, qui permet de passer automatiquement d'un fonctionnement bidimensionnel à un fonctionnement tridimensionnel, et inversement, sans qu'il soit nécessaire de recourir à plusieurs dispositifs distincts. Cela constitue un avantage précieux pour les utilisateurs appelés à travailler alternativement dans un espace virtuel tridimensionnel et dans un plan bidimensionnel. De ce point de vue, il est à noter que le mode de fonctionnement bidimensionnel peut également permettre d'effectuer le déplacement du curseur dans un plan différent de celui de l'écran, en effectuant une transformation supplémentaire des données correspondant à une projection des coordonnées et de l'orientation dans cet autre plan.

En outre, dans une variante de réalisation non représentée, le boîtier mobile du périphérique d'entrée peut également contenir les éléments habituels d'une souris 2D de conception classique, en plus du contacteur 22 et des moyens 16 de détection de la position et de l'orientation tridimensionnelles du boîtier. Dans ce cas, le troisième module logiciel 44 peut être remplacé par un module fonctionnant de la manière décrite lorsque le périphérique est dans son mode de fonctionnement tridimensionnel et fonctionnant de la même manière que les logiciels associés aux souris 2D classiques, lorsque le périphérique est dans son mode de fonctionnement bidimensionnel. Il est à noter toutefois que, dans ce cas, l'encombrement du boîtier 10 est légèrement augmenté et qu'aucun changement d'orientation du curseur 46 ne peut être commandé en mode de fonctionnement bidimensionnel.

## Revendications

1. Périphérique d'entrée pour ordinateur, comprenant un boîtier mobile (10) apte à être saisi par un utilisateur, et des moyens (16,18) de détection de position et d'orientation tridimensionnelles et bidimensionelles du boîtier, **caractérisé par le fait qu'**un contacteur (22) à deux états est placé sur une face (12)du boîtier (10) apte à être posée sur un support plan (14), de façon à occuper automatiquement un premier état correspondant à un mode de fonctionnement bidimensionnel du périphérique, lorsque le boîtier est posé sur le support, et un deuxième état, correspondant à un mode de fonctionnement tridimensionnel du périphérique, lorsque le boîtier est soulevé du support.

2. Périphérique selon la revendication 1, dans lequel les moyens de détection de position et d'orientation tridimensionnelles du boîtier comprennent un capteur électromagnétique (16) monté dans le boîtier (10).

3. Périphérique selon la revendication 2, dans lequel les moyens de détection de position et d'orientation tridimensionnelles du boîtier comprennent de plus un circuit électronique (18) de prétraitement, extérieur au boîtier (10), relié au capteur électromagnétique (16) par un conducteur électrique (20).

4. Périphérique selon l'une quelconque des revendications précédentes, dans lequel le boîtier (10) est muni d'au moins un bouton (24) de déclenchement de traitements informatiques.

5. Périphérique selon la revendication 4, dans lequel un circuit électronique (26) de mise en forme de signaux délivrés par le contacteur (22) et par le bouton (24) est monté dans le boîtier (10).

6. Périphérique selon l'une quelconque des revendications précédentes, dans lequel les moyens (16) de détection de position et d'orientation tridimensionnelles délivrent des signaux représentatifs des coordonnées (x, y, z) et des orientations (α, β, γ) du boîtier (10) dans un repère orthonormé fixe R (O, i, j, k) lié au support et dont les axes i et j sont dans le plan du support.

7. Procédé d'interaction d'un périphérique d'entrée selon la revendication 6, avec un écran d'affichage (34) d'un ordinateur, comprenant les étapes suivantes :

   - détermination du mode de fonctionnement du périphérique ;
   - calcul des coordonnées (x',y',z') et orientations (α', β', γ) d'un curseur 3D (46) affiché sur l'écran (34), dans un repère orthonormé R' (O', i', j', k') lié à une scène 3D virtuelle représentée sur l'écran, à partir des signaux délivrés par les moyens (16) de détection de position et d'orientation tridimensionnelles, dans le mode de fonctionnement tridimensionnel ;
   - calcul des coordonnées (x", y" ) et orientation (α") d'un curseur 2D (45), dans un repère orthonormé R" (O", i", j", k") lié à l'écran (34) et dont les axes i" et j" sont situés dans le plan de l'écran, à partir des signaux délivrés par les moyens (16) de détection de position et d'orientation tridimensionnelles, dans le mode de fonctionnement bidimensionnel.

8. Procédé selon la revendication 7, dans lequel, dans le mode de fonctionnement tridimensionnel, un déplacement du boîtier (10) dans le repère R d'une position P1 de coordonnées $(x_1, y_1, z_1)$ et d'orientations $(\alpha_1, \beta_1, \gamma_1)$ à une position P2 de coordonnées $(x_2, y_2, z_2)$ et d'orientations $(\alpha_2, \beta_2, \gamma_2)$ se traduit par un déplacement du curseur 3D (46) dans le repère R' d'une position P'1 de coordonnées $(x'_1, y'_1, z'_1)$ et d'orientations $(\alpha'_1, \beta'_1, \gamma'_1)$ à une position P'2 de coordonnées $(x'_2, y'_2, z'_2)$ et d'orientations $(\alpha'_2, \beta'_2, \gamma'_2)$, calculées à l'aide des relations :

$$x'_2 = x'_1 + Cx\,(x_2 - x_1)$$

$$y'_2 = y'_1 + Cy\,(y_2 - y_1)$$

$$z'_2 = z'_1 + Cz\,(z_2 - z_1)$$

$$\alpha'_2 = \alpha'_1 + C\alpha\,(\alpha_2 - \alpha_1)$$

$$\beta'_2 = \beta'_1 + C\beta\,(\beta_2 - \beta_1)$$

$$\gamma'_2 = \gamma'_1 + C\gamma\,(\gamma_2 - \gamma_1)$$

dans lesquelles Cx, Cy, Cz, $C\alpha$, $C\beta$ et $C\gamma$ représentent des gains paramétrables, respectivement en x, y, z, $\alpha$, $\beta$ et $\gamma$.

9. Procédé selon l'une quelconque des revendications 7 et 8, dans lequel, dans le mode de fonctionnement bidimensionnel, un déplacement du boîtier (10) sur le support (14), dans le repère R d'une position P1 de coordonnées $(x_1, y_1)$ et d'orientation $(y_1)$ à une position P2 de coordonnées $(x_2, y_2)$ et d'orientation $\gamma_2$ se traduit par un déplacement du curseur 2D (45) dans le repère R" d'une position P"1 de coordonnées $(x''_1, y''_1)$ et d'orientation $(y''_1)$ à une position P"2, de coordonnées $x''_2, y''_2$ et d'orientation $y''_2$ calculées à l'aide des relations :

$$x''_2 = x''_1 + Fx\,(x_2 - x_1)$$

$$y''_2 = y''_1 + Fy\,(y_2 - y_1)$$

$$\gamma''_2 = \gamma''_1 + F\gamma\,(\gamma_1 - \gamma_2)$$

dans lesquelles Fx, Fy, $F\gamma$ représentent des gains paramétrables, respectivement en x, y et $\gamma$, la position P1 étant la position initiale du boîtier lors du passage du périphérique dans le mode de fonctionnement bidimensionnel, la position P"1 étant la position finale du curseur 2D (45) lors du précédent passage du mode de fonctionnement bidimensionnel au mode de fonctionnement tridimensionnel.

**Patentansprüche**

1. Eingabe-Endgerät für einen Computer mit einem mobilen Gehäuse (10), das von einem Anwender gefasst werden kann, und Mitteln (16,18) zur Erfassung der zweidimensionalen und dreidimensionalen Position und Ausrichtung des Gehäuses, **dadurch gekennzeichnet, dass** ein Kontaktschalter (22) mit zwei Zuständen an einer Seite (12) des Gehäuses (10), die auf einen ebenen Träger (14) gelegt werden kann, so dass er automatisch einen ersten Zustand, der einem zweidimensionalen Funktionsmodus des Endgeräts entspricht, einnimmt, wenn das Gehäuse auf den Träger gelegt ist, und einen zweiten Zustand, der einem dreidimensionalen Funktionsmodus des Endgeräts entspricht, angeordnet ist, wenn das Gehäuse vom Träger abgehoben wird.

2. Endgerät nach Anspruch 1, wobei die Mittel zur Erfassung der dreidimensionalen Position und Ausrichtung des Gehäuses einen im Gehäuse (10) angebrachten elektromagnetischen Messfühler (16) umfassen.

3. Endgerät nach Anspruch 2, wobei die Mittel zur Erfassung der dreidimensionalen Position und Ausrichtung des Gehäuses außerdem eine elektronische Vorverarbeitungsschaltung (18) außerhalb des Gehäuses (10) aufweisen, die mit dem elektromagnetischen Messfühler (16) durch einen elektrischen Leiter (20) verbunden ist.

4. Endgerät nach einem der vorangehenden Ansprüche, wobei das Gehäuse (10) mit mindestens einem Knopf (24) zum Auslösen der Verarbeitung von Daten versehen ist.

5. Endgerät nach Anspruch 4, wobei eine elektronische Schaltung (26) zur Umformung der von dem Kontaktgeber (22) und dem Knopf (24) gelieferten Signale in dem Gehäuse (10) angebracht ist.

6. Endgerät nach einem der vorangehenden Ansprüche, wobei die Mittel (16) zur Erfassung der dreidimensionalen Position und Ausrichtung Signale liefern, welche die Koordinaten (x, y, z) und Ausrichtungen $(\alpha, \beta, \gamma)$ des Gehäuses (10) in einem festen Orthonormal(koordinaten)system R (O, i, j, k), der mit dem Träger verbunden ist und dessen Achsen i und j in der Ebene des Trägers liegen, darstellen.

7. Interaktives Verfahren eines Eingabe-Endgeräts nach Anspruch 6 mit einem Anzeigebildschirm (34) eines Computers, folgende Schritte umfassend:

Bestimmung des Funktionsmodus des Endgeräts,
Berechnung der Koordinaten (x', y', z') und Ausrichtungen (α', β', γ') eines 3D-Cursors (46), der am Bildschirm (34) angezeigt ist, in einem Orthonormalsystem (R' (O', i', j', k'), das mit einer am Bildschirm dargestellten virtuellen 3D-Szene verbunden ist, anhand von durch die Mittel (16) zur Erfassung der dreidimensionalen Position und Ausrichtung im dreidimensionalen Funktionsmodus gelieferten Signalen,
Berechnung der Koordinaten (x", y") und der Ausrichtung (α") eines 2D-Cursors (45) in einem Orthonormalsystem R" (O", i", j", k"), der mit dem Bildschirm (34) verbunden ist und dessen Achsen i" und j" in der Ebene des Bildschirms gelegen sind, anhand von durch die Mittel (16) zur Erfassung der dreidimensionalen Position und Ausrichtung im zweidimensionalen Funktionsmodus gelieferten Signalen.

**8.** Verfahren nach Anspruch 7, wobei im dreidimensionalen Funktionsmodus eine Verschiebung bzw. Versetzung des Gehäuses (10) im Koordinatensystem R von einer Position P1 mit den Koordinaten $(x_1, y_1, z_1)$ und Ausrichtungen $(\alpha_1, \beta_1, \gamma_1)$ zu einer Position P2 mit den Koordinaten $(x_2, y_2, z_2)$ und Ausrichtungen $(\alpha_2, \beta_2, \gamma_2)$ eine Verschiebung bzw. Versetzung des 3D-Cursors (46) im Koordinatensystem R' von einer Position P'1 mit den Koordinaten $(x'_1, y'_1, z'_1)$ und Ausrichtungen $(\alpha'_1, \beta'_1, \gamma'_1)$ zu einer Position P'2 mit den Koordinaten $(x'_2, y'_2, z'_2)$ und Ausrichtungen $(\alpha'_2, \beta'_2, \gamma'_2)$ bewirkt, die mittels folgender Beziehungen berechnet werden:

$$x'_2 = x'_1 + Cx\ (x_2\text{-}x_1)$$

$$y'_2 = y'_1 + Cy\ (y_2\text{-}y_1)$$

$$z'_2 = z'_1 + Cz\ (z_2\text{-}z_1)$$

$$\alpha'_2 = \alpha'_1 + C\alpha\ (\alpha_2\text{-}\alpha_1)$$

$$\beta'_2 = \beta'_1 + C\beta\ (\beta_2\text{-}\beta_1)$$

$$\gamma'_2 = \gamma'_1 + C\gamma\ (\gamma_2\text{-}\gamma_1)$$

wobei Cx, Cy, Cz, Cα, Cβ und Cγ Verstärkungsparameter jeweils für x, y, z, α, β und γ darstellen.

**9.** Verfahren nach einem der Ansprüche 7 oder 8, wobei im zweidimensionalen Funktionsmodus eine Verschiebung bzw. Versetzung des Gehäuses (10) am Träger (14) im Koordinatensystem R von einer Position P1 mit den Koordinaten $(x_1, y_1)$ und der Ausrichtung $(\gamma_1)$ zu einer Position P2 mit den Koordinaten $(x_2, y_2)$ und der Ausrichtung $(\gamma_2)$ eine Verschiebung bzw. Versetzung des 2D-Cursors (45) im Koordinatensystem R" von einer Position P"1 mit den Koordinaten $(x"_1, y"_1)$ und der Ausrichtung $(\gamma"_1)$ zu einer Position P"2 mit den Koordinaten $x"_2, y"_2$ und der Ausrichtung $\gamma"_2$ bewirkt, die mit Hilfe folgender Beziehungen berechnet werden:

$$x"_2 = x"_1 + Fx\ (x_2\text{-}x_1)$$

$$y"_2 = y"_1 + Fy\ (y_2\text{-}y_1)$$

$$\gamma"_2 = \gamma"_1 + F\gamma\ (\gamma_2\text{-}\gamma_1)$$

wobei Fx, Fy, Fγ Verstärkungsparameter jeweils für x, y und γ darstellen, wobei die Position P1 die Anfangsposition des Gehäuses beim Übergang des Endgeräts in den zweidimensionalen Funktionsmodus ist und die Position P"1 die Endposition des 2D-Cursors (45) beim vorhergehenden Übergang vom zweidimensionalen Funktionmodus zum dreidimensionalen Funktionsmodus ist.

**Claims**

**1.** Input peripheral for a computer, comprising a mobile casing (10) designed to be held in the user's hand and means (16, 18) of detecting the two and three dimensional position and orientation of the casing, **characterized in that** a two-state contactor (22) is placed on one surface (12) of the casing (10) designed to be put down on a flat support (14) so as to automatically occupy a first state corresponding to a two dimensional operating mode of the peripheral when the casing is placed on the support, and a second state corresponding to a three dimensional operating mode of the peripheral when the casing is lifted off the support.

**2.** Peripheral according to claim 1, in which the means of detecting the three dimensional position and orientation of the casing include an electromagnetic sensor (16) mounted in the casing (10).

**3.** Peripheral according to claim 2, in which the means of detecting the three dimensional position and orientation of the casing also include an electronic preprocessing circuit (18) outside the casing (10), connected to the electromagnetic sensor (16) through an electric conductor (20).

4. Peripheral according to any one of the preceding claims, in which the casing (10) is provided with at least one button (24) to start computer processing.

5. Peripheral according to claim 4, in which an electronic shaping circuit (26) for signals supplied by the contactor (22) and by the button (24) is installed inside the casing (10).

6. Peripheral according to any one of the preceding claims, in which the means (16) of detecting the three dimensional position and orientation supplies signals representing the coordinates $(x, y, z)$ and orientations $(\alpha, \beta, \gamma)$ of the casing (10) in a fixed orthonormal coordinate system R $(o, i, j, k)$ related to the support and for which the axes i and j are in the plane of the support.

7. Interaction process between an input peripheral as defined in claim 6 and a computer display screen, comprising the following steps:

   - determine the operating mode of the peripheral;
   - calculate the coordinates x', y', z' and the orientations $\alpha'$, $\beta'$, $\gamma$ of a 3D cursor (46) displayed on the screen (34) in an orthonormal coordinate system R' $(o', i', j', k')$ related to a 3D virtual scene represented on the screen, starting from signals output by the means (16) of detecting a three dimensional position and orientation in the three dimensional operating mode;
   - calculate the coordinates $(x'', y'')$ and orientation $(\alpha'')$ of a 2D cursor (45) in an orthonormal coordinate system r" $(o'', i'', j'', k'')$ related to the screen (34), for which the i" and j" axes are located in the plane of the screen, starting from the signals output by the means (16) of detecting the three dimensional position and orientation, in the two dimensional operating mode.

8. Process according to claim 7, in which in the three dimensional operating mode, a movement of the casing (10) in coordinate system R from a position P1 with coordinates $(x_1, y_1, z_1)$ and orientations $(\alpha_1, \beta_1, \gamma_1)$, to a position P2 with coordinates $(x_2, y_2, z_2)$ and orientations $(\alpha_2, \beta_2, \gamma_2)$, will displace the 3D cursor (46) in the R' coordinate system from a position P'1 with coordinates $(x'_1, y'_1, z'_1)$ and orientations $\alpha'_1, \beta'_1, \gamma'_1)$, to a position P'$_2$ with coordinates $(x'_2, y'_2, z'_2)$ and orientations $(\alpha'_2, \beta'_2, \gamma'_2)$, calculated using the following relations:

$$x'_2 = x'_1 + Cx \, (x_2 - x_1)$$

$$y'_2 = y'_1 + Cy \, (y_2 - y_1)$$

$$z'_2 = z'_1 + Cz \, (z_2 - z_1)$$

$$\alpha'_2 = \alpha'_1 + C\alpha \, (\alpha_2 - \alpha_1)$$

$$\beta'_2 = \beta'_1 + C\beta \, (\beta_2 - \beta_1)$$

$$\gamma'_2 = \gamma'_1 + C\gamma \, (\gamma_2 - \gamma_1)$$

in which Cx, Cy, Cz, C$\alpha$, C$\beta$ and C$\gamma$ represent gains that can be configured in x, y, z, a, $\beta$, $\gamma$ respectively.

9. Process according to either of the claims 7 and 8, in which in the two dimensional operating mode, moving the casing (10) on the support (14) in the R coordinate system from a position P1 with coordinates $(x_1, y_1)$ and orientation $\gamma_1$ to a position P2 with coordinates $(x_2, y_2)$ and orientation $\gamma_2$ will move the 2D cursor (45) in the R" coordinate system from a position P"1 with coordinates $(x''_1, y''_1)$ and orientation $\gamma''_1$ to a position P"2 with coordinates $(x''_2, y''_2)$ and orientation $\gamma''_2$ calculated using the following relations:

$$x''_2 = x''_1 + Fx \, (x_2 - x_1)$$

$$y''_2 = y''_1 + Fy \, (y_2 - y_1)$$

$$\gamma''_2 = \gamma''_1 + F\gamma \, (\gamma_2 - \gamma_1)$$

in which Fx, Fy and F$\gamma$ are gains that can be configured in x, y and $\gamma$ respectively, position P1 being the initial position of the casing when the peripheral changes to the two dimensional operating mode, position P"1 being the final position of the 2D cursor (45) during the previous changeover from the two dimensional operating mode to the three dimensional operating mode.

FIG.1

FIG. 2

FIG. 3